# FASCICULE DE BREVET EUROPEEN

(11) **EP 1 050 733 B1**
(45) Date de publication et mention de la délivrance du brevet: **13.07.2005**
(21) Numéro de dépôt: 00401189.6
(22) Date de dépôt: 28.04.2000
(51) Int. Cl.: F28D 17/00, F25J 3/04

(54) **Appareil d'échange thermique à contre-courant et son application aux installations de distillation d'air**
Gegenstromwärmetauscher und dessen Anwendung in Luftzerlegungsanlagen
Countercurrent heat exchanger and its application to air distillation plants

(30) Priorité: 04.05.1999 FR 9905646
(43) Date de publication de la demande: 08.11.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Monereau, Christian, 75011 Paris (FR)
(74) Mandataire: Le Moenner, Gabriel

(56) Documents cités:
- EP-A- 0 438 282
- WO-A-96/23188
- DE-C- 4 108 744
- FR-A- 1 246 856
- US-A- 2 272 108
- US-A- 2 735 278
- US-A- 5 802 872

## Description

La présente invention est relative à une installation de distillation d'air conforme au préambule de la revendication 1.

L'invention s'applique notamment au refroidissement de l'air atmosphérique destiné à être distillé, et plus généralement aux unités de liquéfaction, de séparation, de purification ou de génération de froid dans lesquelles on met en oeuvre un niveau de température sensiblement inférieur à la température atmosphérique, par exemple inférieur à -20°C.

Dans ce qui suit, on se réfèrera à la séparation des gaz de l'air par distillation.

Une méthode classique pour séparer les gaz de l'air consiste à comprimer de l'air atmosphérique, à l'épurer en eau et en CO₂ et à le refroidir, puis à l'introduire dans un appareil de distillation dans lequel il est séparé en au moins un fluide riche en azote et au moins un fluide riche en oxygène. Au moins une partie de ces effluents est réchauffée jusqu'à la température ambiante, le froid disponible étant utilisé pour abaisser la température de l'air. La puissance frigorifique nécessaire est généralement fournie par une turbine de détente traitant une fraction de l'air. De nombreuses variantes de ce procédé sont décrites dans la littérature.

Les moyens d'épuration et de refroidissement de l'air sont de trois types :
(1) Les régénérateurs-épurateurs, qui contiennent un garnissage, organisé ou en vrac, d'accumulation de chaleur. Ils peuvent être utilisés par paires ou en groupe, par rotation. La description qui en est faite ci-dessous correspond à un fonctionnement par paire pour faciliter l'explication.
   Dans une demi-période, un régénérateur donné est refroidi par circulation dans un premier sens d'un flux gazeux résiduaire de l'appareil de distillation. Dans la demi-période suivante, le même régénérateur est parcouru dans l'autre sens par l'air à refroidir, dont il piège l'eau et le CO₂ par solidification.
(2) Les échangeurs réversibles, dont chaque passage est alternativement parcouru par un flux gazeux froid et par l'air à refroidir. Les inversions permettent, comme dans le cas précédent, d'évacuer par élution les impuretés solides qui se sont déposées dans les passages parcourus par l'air.
   Les échangeurs réversibles peuvent en outre renfermer un (ou des) faisceau(x) d'échange thermique complémentaire(s) permettant en particulier de réchauffer un fluide pur.
(3) L'épuration en tête : L'air comprimé est épuré au voisinage de la température ambiante par adsorption sélective de l'eau et du CO₂, puis l'air épuré est refroidi, soit dans un régénérateur, soit dans un simple échangeur de chaleur.

Les régénérateurs-épurateurs et les régénérateurs purement thermiques peuvent en outre renfermer un (ou des) faisceau(x) d'échange thermique complémentaire(s) permettant de réchauffer un fluide pur.

Dans tous les cas, on utilise au moins un appareil d'échange thermique, généralement à contre-courant, dont la surface extérieure a une grande étendue et présente une température variable entre la température d'entrée du fluide chaud, qui est l'air, et une très basse température, de l'ordre de -180 à -200°C.

Afin de limiter les échanges thermiques parasites qui diminuent les performances de l'installation, ces appareils d'échange thermique sont généralement isolés du milieu extérieur par une boîte froide, qui est une enveloppe métallique garnie d'un isolant sous atmosphère d'azote pour empêcher l'entrée d'humidité.

Malgré la présence de cette boîte froide, qui représente un investissement élevé, les échanges thermiques résiduels, via l'isolant, entre les parties chaudes et les parties froides de l'appareil d'échange thermique et entre les parties froides et l'environnement, restent substantiels. Ainsi, les pertes thermiques de la ligne d'échange thermique par rapport à l'environnement représentent souvent 20 à 25% de la totalité des pertes thermiques de l'installation.

US-A-2735278 décrit une installation selon le préambule de la revendication 1, la disposition des entrées de l'air et du gaz issu de la séparation étant le contraire de celle de l'invention.

L'invention a pour but de réduire les échanges thermiques parasites des appareils d'échange thermique à contre-courant.

L'invention a pour objet une installation de distillation d'air, selon la revendication 1.

L'invention a également pour objet un procédé de refroidissement cryogénique selon la revendication 9.

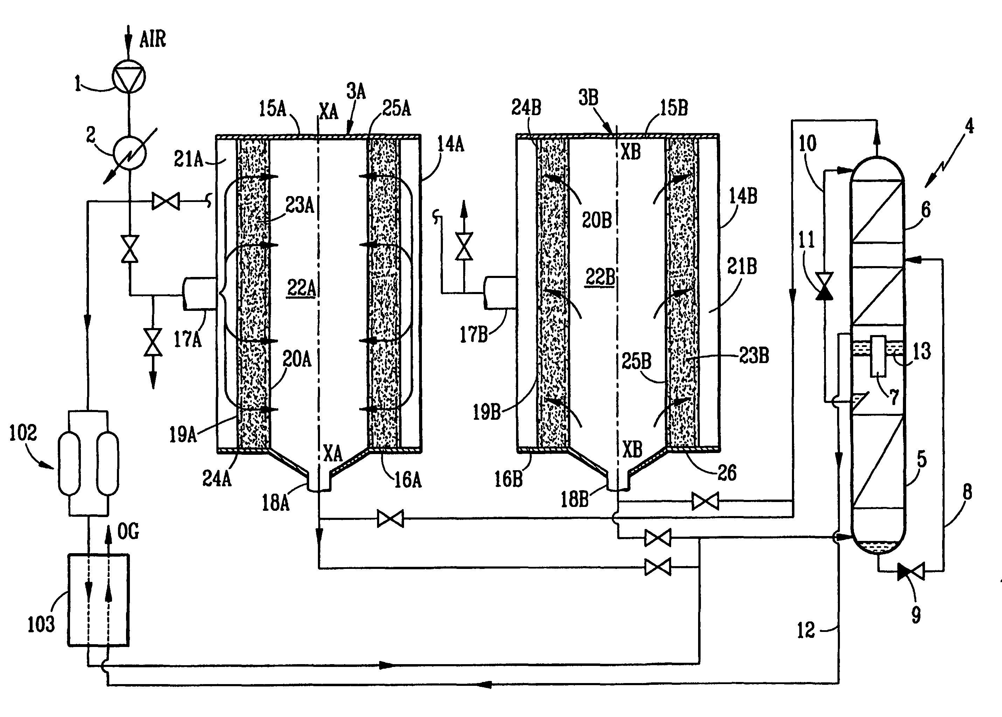

Un exemple de réalisation de l'invention va maintenant être décrit en regard du dessin annexé, dont la Figure unique représente schématiquement une installation de distillation d'air conforme à l'invention.

L'installation représentée au dessin est destinée à produire de l'oxygène gazeux à partir d'air atmosphérique par distillation. Elle comprend essentiellement un compresseur d'air 1 muni à sa sortie d'un réfrigérant 2 à air ou à eau, deux régénérateurs 3A, 3B identiques et montés en parallèle, un dispositif 102 d'épuration d'air par adsorption, un échangeur de chaleur 103, et une double colonne de distillation 4.

La double colonne 4 est constituée, de façon classique, d'une colonne de distillation moyenne pression 5 surmontée d'une colonne de distillation basse pression 6, avec un vaporiseur-condenseur 7 qui permet de condenser la vapeur de tête (azote à peu près pur) de la colonne 5 par vaporisation du liquide de cuve (oxygène à peu près pur) de la colonne 6. On a représenté la conduite 8 de remontée du « liquide riche » (air enrichi en oxygène) de la cuve de la colonne 5 à un niveau intermédiaire de la colonne 6, cette conduite étant équipée d'une vanne de détente 9, et également la conduite 10 de remontée du « liquide pauvre » (azote à peu près pur) de la tête de la colonne à celle de la colonne 6, cette conduite étant équipée d'une vanne de détente 11. L'oxygène gazeux produit est véhiculé via une conduite de soutirage 12 piquée en cuve de la colonne 6, juste au-dessus du bain d'oxygène liquide 13.

On décrira maintenant la structure des régénérateurs 3A et 3B, les références utilisées étant dépourvues de suffixe mais devant être entendues comme affectées pour chaque régénérateur du suffixe A ou B respectivement.

Chaque régénérateur 3 comprend une virole cylindrique 14 d'axe vertical X-X, munie d'un fond supérieur 15 et d'un fond inférieur 16. Une conduite 17 débouche à peu près à mi-hauteur dans la virole 14, tandis qu'une conduite 18 débouche dans la région centrale du fond 16.

Deux grilles cylindriques, à savoir une grille extérieure 19 et une grille intérieure 20, s'étendent du fond 15 au fond 16, auxquelles elles sont fixées rigidement. La grille 19 délimite avec la virole 14 un espace annulaire extérieur 21, tandis que la grille 20 entoure un espace cylindrique central 22. Entre les deux grilles est délimité un autre espace annulaire, qui est empli d'un lit annulaire 23 de gravillons.

On a également indiqué schématiquement sur le dessin un ensemble de conduites et de vannes qui permettent de réaliser sélectivement l'une ou l'autre des deux liaisons suivantes :
(l1) Liaison de la sortie du réfrigérant 2 à la conduite 17A, de la conduite 18A à la cuve de la colonne 5, du sommet de la colonne 6 à la conduite 18B, et de la conduite 17B à l'atmosphère ;
(l2) Liaison de la sortie du réfrigérant 2 à la conduite 17B, de la conduite 18B à la cuve de la colonne 5, du sommet de la colonne 6 à la conduite 18A, et de la conduite 17A à l'atmosphère.

Sur le dessin, on a indiqué en traits gras la liaison (l1).

L'installation fonctionne de la manière suivante.

La liaison (l1) étant établie par une manoeuvre appropriée des vannes, le gaz résiduaire de tête de la colonne 6, constitué par de l'azote impur, pénètre dans l'espace central 22B du régénérateur 3B via la conduite 18B. Ce gaz traverse dans l'ensemble radialement, dans le sens centrifuge, le lit 23B, en refroidissant celui-ci. Il parvient ensuite dans l'espace extérieur 21B, quitte le régénérateur via la conduite 17B, et est évacué dans l'atmosphère.

Simultanément, une partie de l'air entrant, comprimé en 21 et ramené en 2 au voisinage de la température ambiante, pénètre dans l'espace annulaire 21A, traverse dans l'ensemble radialement, dans le sens centripète, le lit 23A, qui a été préalablement refroidi comme décrit ci-dessus, et se refroidit ainsi jusqu'au voisinage de son point de rosée, puis il parvient dans l'espace central 22A. Il quitte ensuite le régénérateur 3A via la conduite 18A et est envoyé en cuve de la colonne 5.

Au cours de ce refroidissement, la solidification de l'eau et du CO₂ contenus dans l'air provoque l'arrêt de ces éléments par le lit 23A, et donc l'épuration simultanée de l'air.

Le reste de l'air comprimé et pré-refroidi en 2 est épuré dans le dispositif d'adsorption 102, puis refroidi dans l'échangeur de chaleur indirect 103 à contre-courant de l'oxygène véhiculé dans la conduite 12, avant d'être introduit en cuve de la colonne 5.

Cette phase de fonctionnement se poursuit jusqu'à ce que, d'une part, il subsiste dans le lit 23B une couche annulaire extérieure mince 24B d'épaisseur prédéterminée au voisinage de la température ambiante T1, et, d'autre part, il subsiste dans le lit 23A une couche annulaire intérieure mince 25A d'épaisseur prédéterminée au voisinage de la température froide T2 du gaz résiduaire. Cette phase dure généralement de 1 à 15 minutes .

On passe alors de la liaison (l1) à la liaison (l2). L'air se refroidit alors en traversant dans le sens centripète le lit 23B, avant d'être envoyé dans la colonne 5, pendant que l'azote impur refroidit le lit 23A par circulation centrifuge tout en en éliminant par élution l'eau et le CO₂ précédemment piégés par celui-ci.

De nouveau, cette phase de fonctionnement est arrêtée lorsqu'il subsiste deux minces couches annulaires extérieure 24A et intérieure 25B dans les deux lits, respectivement au voisinage de la température ambiante et de la température froide T2.

Ainsi, au cours du refroidissement de chaque lit par l'azote impur, le front froid ne sort jamais du lit et, au cours de son réchauffement par l'air, il en est de même du front chaud. Par suite, les espaces extérieurs 21A et 21B restent en permanence au voisinage de la température ambiante, et les espaces intérieurs 22A et 22B restent en permanence au voisinage de la température froide T2.

Grâce à cette disposition, les échanges de chaleur parasites, d'une région à l'autre d'un régénérateur ou entre celui-ci et l'atmosphère environnante, sont minimisés, et il n'est pas nécessaire d'isoler thermiquement les viroles 14A et 14B, qui constituent en pratique l'essentiel de la surface extérieure des régénérateurs. Comme représenté, il suffit de prévoir une isolation thermique 26 sur les deux fonds de chaque régénérateur, voire sur la seule région radialement intérieure de ces fonds.

Les technologies connues de réalisation des appareils (adsorbeurs ou réacteurs) à lit annulaire, quant à la distribution des deux fluides, à la constitution et à la fixation des grilles, peuvent être utilisées ici. On tiendra compte bien entendu des pressions des deux fluides (5 à 6 bars absolus pour l'air, 1,1 à 1,2 bar absolu pour l'azote impur par exemple dans les schémas les plus classiques), de leurs niveaux de température, et de l'absence de fluctuation des températures des deux grilles.

De même, les vannes de la partie froide seront avantageusement remplacées, de façon classique, par des boîtes à clapets qui fonctionnent sous le seul effet des pressions des deux fluides.

Il est à noter que les lits annulaires 23 offrent aux fluides une très grande section de passage, ce qui permet d'utiliser des lits de faible épaisseur. Le gain de perte de charge résultant peut être mis à profit pour réduire la pression de compression de l'air entrant, et donc l'énergie consommée, et/ou pour utiliser des lits plus efficaces.

En particulier, au lieu des graviers de diamètre équivalent 15 mm généralement utilisés dans les régénérateurs à flux verticaux, on peut avoir recours à des gravillons plus petits, de diamètre équivalent compris entre 1 et 10 mm, par exemple d'environ 5 mm. Avec de tels gravillons, à volume égal, la surface d'échange gaz/particules est augmentée d'un facteur 3 ; pour des vitesses d'écoulement identiques, le coefficient d'échange thermique augmente d'un facteur de l'ordre de 2. On peut donc réduire les dimensions des régénérateurs.

En variante, les gravillons qui constituent les lits annulaires peuvent être remplacés par d'autres types de particules en vrac, ou encore par des garnissages organisés.

Dans un autre mode de mise en oeuvre, les régénérateurs peuvent être utilisés en tant que régénérateurs uniquement thermiques, auquel cas ils sont précédés d'un appareil d'épuration distinct, notamment par adsorption. En variante également, chaque régénérateur peut comporter des moyens d'épuration distincts des moyens de refroidissement, sous la forme d'un second lit annulaire de particules adsorbant l'eau et le CO₂, ce second lit entourant le lit 23.

Ces moyens d'épuration peuvent soit arrêter la totalité de l'eau et du CO₂, soit n'arrêter que partiellement la vapeur d'eau, pour éviter toute condensation sous forme liquide avant le piégeage sous forme de solide (glace). Les moyens d'épuration peuvent être adaptés pour assurer également l'arrêt d'autres polluants secondaires de l'air.

D'autres configurations d'échangeurs de chaleur à contre-courant, réversibles ou non, à circulation globalement centripète d'un premier fluide et globalement centrifuge d'un second fluide, sont envisageables, par exemple à partir d'un enroulement en spirale d'un empilement de tôles minces séparées par des ondes-entretoises. Chaque paire de tôles définit un passage de faible épaisseur, et des barres de fermeture ferment hermétiquement chaque passage sur son pourtour en laissant libres des ouvertures d'entrée et de sortie pour le ou les fluides qui y circulent.

Une autre réalisation d'échangeur de ce type consiste en un empilage de galettes fonctionnant en parallèle entre deux collecteurs centraux à température cryogénique et deux collecteurs périphériques proches de la température ambiante, chaque galette consistant en un bitube enroulé en spirale sur lui-même.

## Revendications

1. Installation de distillation d'air, du type comprenant des moyens (1) de compression d'air, des moyens (3) de refroidissement et d'épuration de l'air, et un appareil de distillation d'air (4) alimenté en air refroidi et épuré, les moyens de refroidissement et d'épuration comprennent au moins un appareil d'échange thermique (3) destiné à refroidir de l'air atmosphérique destiné à être distillé, par récupération du froid contenu dans un courant de fluide issu de l'appareil de distillation d'air (4). L'appareil étant un appareil d'échange chimique à contre-courant entre l'air disponible à une température voisine de la température ambiante et le fluide issu de l'apparail disponible à une température cryogénique inférieure à -20°C, **caractérisée en ce que** l'appareil comprend des moyens pour faire circuler l'air de façon globalement centripète par rapport à un axe central général (X-X) de l'appareil (3), à partir d'une entrée radialement extérieure (17) de l'appareil, et des moyens pour faire circuler le fluide issu de l'appareil de façon globalement centrifuge par rapport audit axe central, à partir d'une entrée radialement intérieure (18) de l'appareil, l'appareil comprenant au moins un passage reliant les deux entrées (17, 18) et destiné à être parcouru alternativement en sens opposés par les deux fluides.

2. Installation suivant la revendication 1, **caractérisée en ce que** ledit passage comporte sur au moins une partie (23) de sa longueur un garnissage, notamment un garnissage en vrac, d'accumulation de chaleur.

3. Installation suivant la revendication 1 ou 2, **caractérisée en ce que** ledit passage comprend sur au moins une partie de sa longueur un garnissage, notamment un garnissage en vrac, d'adsorption sélective de certains constituants de l'un des fluides.

4. Installation suivant la revendication 2 ou 3, **caractérisée en ce que** le ou chaque garnissage est disposé suivant un lit annulaire (23).

5. Installation suivant l'une quelconque des revendications 2 à 4, **caractérisée en ce que** le ou au moins un garnissage est constitué de particules ayant un diamètre équivalent inférieur à 15 mm et de préférence compris entre 1 et 10 mm.

6. Installation suivant l'une quelconque des revendications 1 à 5, **caractérisée en ce qu'**il constitue un régénérateur thermique.

7. Installation suivant l'une des revendications 1 à 6, **caractérisée en ce qu'**il est destiné en outre à épurer en eau et en CO₂, et éventuellement en d'autres impuretés, l'air en cours de refroidissement.

8. Installation suivant l'une des revendications 1 à 7, **caractérisée en ce qu'**il comprend un lit annulaire extérieur d'adsorption d'eau et de CO₂, et éventuellement d'autres impuretés, contenus dans l'air à traiter.

9. Procédé de refroidissement cryogénique d'un premier fluide disponible au voisinage de la température ambiante par échange thermique à contre-courant avec un deuxième fluide disponible à une température cryogénique inférieure à -20°C, **caractérisé en ce qu'**on fait circuler le premier fluide dans un appareil d'échange thermique (3) de façon globalement centripète par rapport à un axe central général (X-X) de cet appareil, à partir d'une entrée radialement extérieure (17) de l'appareil, et on fait circuler le second fluide de façon globalement centrifuge par rapport audit axe central, à partir d'une entrée radialement intérieure (18) de l'appareil, et **en ce que** les fluides traversent alternativement en sens opposés un passage de l'appareil (3) reliant lesdites entrées (17, 18).

10. Procédé suivant la revendication 9, **caractérisé en ce que** ledit passage comporte sur au moins une partie (23) de sa longueur un garnissage, notamment un garnissage en vrac, d'accumulation de chaleur.

11. Procédé suivant la revendication 9 ou 10, **caractérisé en ce que** ledit passage comprend sur au moins une partie de sa longueur un garnissage, notamment un garnissage en vrac, d'adsorption sélective de certains constituants de l'un des fluides.

12. Procédé suivant la revendication 10 ou 11, **caractérisé en ce que** le ou chaque garnissage est disposé suivant un lit annulaire (23).

13. Procédé suivant la revendication 12, **caractérisé en ce qu'**on arrête la circulation du premier fluide lorsque subsiste dans le lit annulaire une couche annulaire extérieure (26B) d'épaisseur prédéterminée au voisinage de la température ambiante, et on arrête la circulation du deuxième fluide lorsque subsiste dans le lit annulaire une couche annulaire intérieure (25A) d'épaisseur prédéterminée au voisinage de la température cryogénique.

14. Procédé suivant l'une quelconque des revendications 9 à 13, **caractérisé en ce que** le premier fluide est de l'air atmosphérique destiné à être distillé et le deuxième fluide est un courant de fluide issu de l'appareil de distillation d'air (4).

15. Procédé suivant la revendication 14, **caractérisé en ce qu'**on réalise, immédiatement avant ledit refroidissement de l'air, une épuration au moins partielle de cet air en CO₂ et en eau, notamment par adsorption.

16. Procédé suivant la revendication 15, **caractérisé en ce que** l'épuration comprend un arrêt seulement partiel de la vapeur d'eau.

## Patentansprüche

1. Luftzerlegungsanlage des Typs, der Mittel (1) zur Luftkompression, Mittel (3) zur Kühlung und Reinigung der Luft und eine Luftzerlegungsvorrichtung (4), die mit gekühlter und gereinigter Luft versorgt wird, aufweist, wobei die Mittel zum Kühlen und Reinigen mindestens einen Wärmetauscher (3) aufweisen, der dazu bestimmt ist, atmosphärische Luft, die dazu bestimmt ist, zerlegt zu werden, durch Rückgewinnung der Kälte, die in einem aus der Luftzerlegungsvorrichtung (4) kommenden Fluidstrom enthalten ist, abzukühlen, wobei die Vorrichtung ein Gegenstromwärmetauscher ist zwischen der Luft, die bei einer Temperatur in der Nähe der Umgebungstemperatur verfügbar ist, und dem aus der Vorrichtung kommenden Fluidum, das bei einer kryogenen Temperatur unter -20°C verfügbar ist, **dadurch gekennzeichnet, dass** die Vorrichtung Mittel, um die Luft auf im Ganzen zentripetale Art in Bezug auf eine allgemeine Mittelachse (X-X) der Vorrichtung (3), ausgehend von einem Eingang radial außerhalb (17) der Vorrichtung, zum Zirkulieren zu bringen, und Mittel, um das aus der Vorrichtung kommende Fluidum auf im Ganzen zentrifugale Art in Bezug auf diese Mittelachse, ausgehend von einem Eingang radial innerhalb (18) der Vorrichtung zum Zirkulieren zu bringen, aufweist, wobei die Vorrichtung mindestens einen Durchgang aufweist, der die beiden Eingänge (17, 18) verbindet und dazu bestimmt ist, abwechselnd in entgegengesetzten Richtungen von den beiden Fluide durchflossen zu werden.

2. Anlage nach Anspruch 1, **dadurch gekennzeichnet, dass** dieser Durchgang mindestens auf einem Teil (23) von seiner Länge einen Füllkörper, insbesondere einen regellosen Füllkörper, zur Wärmespeicherung aufweist.

3. Anlage nach Anspruch 1 oder 2, **dadurch gekennzeichnet, dass** dieser Durchgang mindestens auf einem Teil von seiner Länge, einen Füllkörper, insbesondere einen regellosen Füllkörper, zur selektiven Adsorption von bestimmten Bestandteilen von einem der Fluide aufweist.

4. Anlage nach Anspruch 2 oder 3, **dadurch gekennzeichnet, dass** der oder jeder Füllkörper einem ringförmigen Bett (23) folgend angeordnet ist.

5. Anlage nach einem der Ansprüche 2 bis 4, **dadurch gekennzeichnet, dass** der oder mindestens ein Füllkörper aus Teilchen gebildet ist, die einen Durchmesser haben, der weniger als 15 mm entspricht und vorzugsweise zwischen 1 und 10 mm liegt.

6. Anlage nach einem der Ansprüche 1 bis 5, **dadurch gekennzeichnet, dass** sie einen Wärmeregenerator bildet.

7. Anlage nach einem der Ansprüche 1 bis 6, **dadurch gekennzeichnet, dass** sie des Weiteren dazu bestimmt ist, die Luft bei der Abkühlung in Wasser und in CO₂ und gegebenenfalls in andere Verunreinigungen zu reinigen.

8. Anlage nach einem der Ansprüche 1 bis 7, **dadurch gekennzeichnet, dass** sie ein äußeres ringförmiges Bett zur Adsorption von Wasser und von CO₂ und gegebenenfalls anderen Verunreinigungen, die in der zu behandelnden Luft enthalten sind, aufweist.

9. Verfahren zur kryogenen Kühlung eines ersten Fluidums, das in der Nähe der Umgebungstemperatur verfügbar ist, durch Gegenstromwärmetausch mit einem zweiten Fluidum, das bei einer kryogenen Temperatur unter -20°C verfügbar ist, **dadurch gekennzeichnet, dass** man das erste Fluidum in einer Wärmetauschvorrichtung (3) auf im Ganzen zentripetale Art in Bezug auf eine allgemeine Mittelachse (X-X) dieser Vorrichtung, ausgehend von einem Eingang radial außerhalb (17) der Vorrichtung, zirkulieren lässt, und man das zweite Fluidum auf im Ganzen zentrifugale Art in Bezug auf diese Mittelachse ausgehend von einem Eingang radial innerhalb (18) der Vorrichtung, zirkulieren lässt, und **dadurch**, dass die Fluide abwechselnd in entgegengesetzte Richtungen einen Durchgang der Vorrichtung (3) durchfließen, der diese Eingänge (17, 18) verbindet.

10. Verfahren nach Anspruch 9, **dadurch gekennzeichnet, dass** dieser Durchgang mindestens auf einem Teil (23) von seiner Länge einen Füllkörper, insbesondere einen regellosen Füllkörper, zur Wärmespeicherung aufweist.

11. Verfahren nach Anspruch 9 oder 10, **dadurch gekennzeichnet, dass** dieser Durchgang mindestens auf einem Teil von seiner Länge einen Füllkörper, insbesondere einen regellosen Füllkörper, zur selektiven Adsorption von bestimmten Bestandteilen von einem der Fluide aufweist.

12. Verfahren nach Anspruch 10 oder 11, **dadurch gekennzeichnet, dass** der oder jeder Füllkörper einem ringförmigen Bett (23) folgend angeordnet ist.

13. Verfahren nach Anspruch 12, **dadurch gekennzeichnet, dass** die Zirkulation des ersten Fluidums angehalten wird, wenn im ringförmigen Bett eine ringförmige äußere Schicht (26B) vorbestimmter Dicke in der Nähe der Umgebungstemperatur fortbesteht und die Zirkulation des zweiten Fluidums angehalten wird, wenn im ringförmigen Bett eine ringförmige innere Schicht (25A) vorbestimmter Dicke in der Nähe der kryogenen Temperatur fortbesteht.

14. Verfahren nach einem der Ansprüche 9 bis 13, **dadurch gekennzeichnet, dass** das erste Fluidum atmosphärische Luft ist, die dazu bestimmt ist, zerlegt zu werden und das zweite Fluidum ein Fluidstrom ist, der aus der Luftzerlegungsvorrichtung (4) stammt.

15. Verfahren nach Anspruch 14, **dadurch gekennzeichnet, dass** unmittelbar vor dieser Luftkühlung, insbesondere durch Adsorption, mindestens eine Teilreinigung dieser Luft in CO₂ und in Wasser durchgeführt wird.

16. Verfahren nach Anspruch 15, **dadurch gekennzeichnet, dass** die Reinigung nur ein Teilanhalten des Wasserdampfes aufweist.

## Claims

1. Air distillation plant, of the type comprising air compression means (1), air cooling and purification means (3) and an air distillation unit (4) supplied with cooled and purified air, the cooling and purifying means comprise at least one heat-exchange apparatus (3) intended for cooling atmospheric air intended to be distilled, by recovering the refrigerating power contained in a fluid stream coming from the air distillation unit (4), the apparatus being an apparatus for countercurrent heat exchange between the air available at a temperature close to the ambient temperature and the fluid coming from the unit available at a cryogenic temperature below -20°C, **characterized in that** the apparatus comprises means for making the air flow in an overall centripedal manner relative to a general central axis (X-X) of the apparatus (3), from a radially external inlet (17) of the apparatus, and means for making the fluid output by the apparatus flow in an overall centrifugal manner relative to the said central axis, from a radially internal inlet (18) of the apparatus, the apparatus including at least one passage that connects the two inlets (17, 18), it being intended for the two fluids to pass through the said passage alternately in opposite directions.

2. Plant according to Claim 1, **characterized in that** the said passage has, over at least one portion (23) of its length, a packing, especially a loose packing, for heat accumulation.

3. Plant according to Claim 1 or 2, **characterized in that** the said passage includes, over at least one portion of its length, a packing, especially a loose packing, for selective adsorption of certain constituents of one of the fluids.

4. Plant according to Claim 2 or 3, **characterized in that** the or each packing is placed after an annular bed (23).

5. Plant according to any one of Claims 2 to 4, **characterized in that** the or at least one packing consists of particles having an equivalent diameter of less than 15 mm and preferably between 1 and 10 mm.

6. Plant according to any one of Claims 1 to 5, **characterized in that** it constitutes a heat regenerator.

7. Plant according to one of Claims 1 to 6, **characterized in that** it is furthermore intended to purify the air being cooled of water and of CO₂, and optionally of other impurities.

8. Plant according to one of Claims 1 to 7, **characterized in that** it includes an external annular bed for the adsorption of water and CO₂, and optionally of other impurities contained in the air to be treated.

9. Method of cryogenically cooling a first fluid available in the region of the ambient temperature by countercurrent heat exchange with a second fluid available at a cryogenic temperature below -20°C, **characterized in that** the first fluid is made to flow through a heat exchange apparatus (3) in an overall centripedal manner relative to a general central axis (X-X) of this apparatus, from a radially external inlet (17) of the apparatus, and is the second fluid made to flow in an overall centrifugal manner relative to the said central axis, from a radially internal inlet (18) of the apparatus, and **in that** the fluids flow alternately in opposite directions through a passage of the apparatus (3) that connects the said inlets (17, 18).

10. Method according to Claim 9, **characterized in that** the said passage has, over at least one portion (23) of its length, a packing, especially a loose packing, for heat accumulation.

11. Method according to Claim 9 or 10, **characterized in that** the said passage includes, over at least one portion of its length, a packing, especially a loose packing, for selective adsorption of certain constituents of one of the fluids.

12. Method according to Claim 10 or 11, **characterized in that** the or each packing is placed as an annular bed (23).

13. Method according to Claim 12, **characterized in that** the circulation of the first fluid is stopped when there remains in the annular bed an outer annular layer (26B) of predetermined thickness in the region of the ambient temperature, and the circulation of the second fluid is stopped when there remains in the annular bed an inner annular layer (25A) of predetermined thickness in the region of the cryogenic temperature.

14. Method according to any one of Claims 9 to 13, **characterized in that** the first fluid is atmospheric air intended to be distilled and the second fluid is a stream of fluid coming from the air distillation unit (4).

15. Method according to Claim 14, **characterized in that**, immediately before the said cooling of the air, this air is at least partially purified of CO₂ and of water, especially by adsorption.

16. Method according to Claim 15, **characterized in that** the purification comprises the partial stoppage of the water vapour.
